# EUROPEAN PATENT APPLICATION

(11) **EP 1 833 195 A1**
(43) Date of publication of application: **12.09.2007**
(21) Application number: 06110957.5
(22) Date of filing: 10.03.2006
(51) Int. Cl.: H04L 12/26, H04L 29/06

(54) **Monitoring of communication service metric**

(71) Applicant: Agilent Technologies, Inc., Santa Clara, CA 95051 (US)
(72) Inventor: Khan Ali,Farman Agilent Technologies Private Ltd, Gurgaon 122015 (Haryana) (IN); Mehrotra, Gautam Agilent Technologies Private Ltd, Gurgaon 122015 (Haryana) (IN)
(74) Representative: Kay, Ross Marcel

(57) **Abstract**

A communications service monitoring system comprises a server (136) for delivering content to a plurality of network subscribers including a service monitoring apparatus (118). The service monitoring apparatus (118) comprises a listener module (202) capable of identifying a content delivery mechanism employed by the server (136) to communicate the content to the service monitoring apparatus (118). A plurality of message handler modules (204, 206, 208) are provided and capable of communicating with the listener module (202). Each of the plurality of message handlers (204, 206, 208) is configured to generate metrics in relation to use of a plurality of respective content delivery mechanisms. Therefore, upon identification of the content delivery mechanism used by the server (136) to communicate the content, the received message is passed to an appropriate one of the plurality of message handlers (204, 206, 208) that receives the message and then generates metrics in relation to communication of the content in accordance with the content delivery mechanism identified.

## Description

The present invention relates to a service monitoring apparatus of the type used, for example, to measure performance and/or availability of a communications service, such as a content delivery service. The present invention also relates to a communications service monitoring system of the type used, for example, to measure performance and/or availability of a communications service, such as a content delivery service. The present invention further relates to a method of monitoring a communications service of the type, for example, that measures performance and/or availability of a communications service, such as a content delivery service.

In the field of network monitoring, it is desirable to monitor performance of a service in a communications network. In this respect, it is known to monitor performance availability in real-time of various types of communications networks, for example: wireless networks, wireline networks, switched networks and packet data networks. By monitoring such networks, it is possible to collect data that enables a Service Provider to have an understanding of a quality of a given service being provided and also to automate management of Service Level Agreements (SLAs) between the Service Provider and subscribers to the given service.

One example of a known service monitoring system is the "Wireless QoS Manager" (WQM) system available from Agilent Technologies, Inc. The WQM system provides availability and quality of service information in relation to wireless and wireline services supported in the communications network of the Network Operator. The WQM system sets up a number of wireless interfaces for application testing and uses the number of wireless interfaces to emulate mobile communications devices in the communications network. Service monitoring, as performed by the WQM system, targets services provided as a whole in the communications network as opposed to individual network elements without any regard to the overall performance collectively provided by a number of network elements. Further, the WQM system employs an active testing methodology whereby one or more service call is initiated by the WQM system in order to emulate a service environment as experienced by an end-user so that QoS parameters of interest can be delivered by the Service Provider (or Network Operator).

Presently, this kind of testing is achieved by providing a first probe to make a periodic service call, for example send a Multimedia Messaging Service (MMS) message, to a second probe, either co-located with the first probe or remotely located by attachment to the communications network at a different geographical location to the first probe. The period of the service call can be configured by the Service Provider to different time intervals, for example: every 15 minutes, every 1 hour, or every 1 day. The WQM system monitors the regularly scheduled messages and generates useful metrics such as a so-called "MMS Send Time" and/or "MMS Receive Time", in an automated and repeatable manner. Alternatively, the above test procedure can be performed on an on-demand basis, i.e. the Service Provider can initiate the test procedure at an exact instant in time, for example when it is necessary to validate performance of a specific service at a predetermined time.

However, the above-described test procedure requires, in addition to a probe to receive test messages, a probe to send the test messages and this approach does not accurately reflect how certain types of service are provided. In this respect, so-called "Push" services, whereby a message is sent to a number of service subscribers, for example stock-price updates, traffic bulletins or weather information, use a central service server to send the messages to subscribers to the service. In such circumstances, a single monitoring probe is provided to receive messages sent by the central service server, but often messages are not sent by the central server at regular intervals, but instead on an ad-hoc basis, sometimes in response to an event unknown to the monitoring probe that receives the messages. Consequently, the monitoring probe is configured to awaken on a periodic basis at a predetermined interval in order the "capture" the messages sent, for example: every 15 minutes, every 1 hour, or every 1 day, depending upon the nature of the information required by the service subscribers.

However, the scheduling of periodic monitoring by the monitoring probe, or even scheduling ad-hoc monitoring for times when arrival of a given message is expected, is problematic as a risk exists that the given message does not arrive at the monitoring probe during an expected time interval and so is missed, resulting either in the generation of erroneous QoS measurements or none at all. Further, when the monitoring probe is scheduled to awaken, the monitoring probe may not be able to receive the message sent by the central server due, for example, to prevailing Radio-Frequency (RF) conditions, such as poor receive signal strength. This is another reason why the sent message can be missed by the monitoring probe. Additionally, periodic awakening of the monitoring probe is an inefficient use of available processing time of the monitoring probe; the processing time can be used for other processing tasks.

According to a first aspect of the present invention, there is provided a communications service monitoring system comprising: a server for interfacing with a communications network, the server being arranged to support a communications service that communicates, when in use, a message associated with delivery of content for receipt by a plurality of network subscribers; a service monitoring apparatus arranged to receive, when in use, the message, the message containing data identifying a first predetermined content delivery mechanism being used to communicate the content, the service monitoring apparatus comprising: a message processor module for processing messages communicated in accordance with the first predetermined content delivery mechanism, the message processor module being arranged to generate a first at least one metric in relation to the communication of the message; and a listening module arranged to identify a content delivery mechanism associated with the received message and communicate the message to the message processor module in response to the content delivery mechanism being identified as the first predetermined content delivery mechanism.

The communications service may be an asynchronous communications service.

The communications service may be initiated by the server.

The communications service may be a push service.

The service monitoring apparatus may be arranged to interface with the communications network.

The communications network may be wireless communications network.

The service monitoring apparatus may be wireless communication capable.

The plurality of network subscribers may be subscribed to the communications service.

The server may be arranged to communicate the message for receipt by the plurality of network subscribers that includes the service monitoring apparatus.

The service monitoring apparatus may be arranged to acquire a network subscription identity for receiving the message as one of the plurality of network subscribers.

The network subscription identity may be acquired from a subscriber identity allocator.

The subscriber identity allocator may be a multiplexer.

The system may further comprise a second message processor module for processing messages communicated in accordance with a second predetermined content delivery mechanism, the second message processor module being arranged to generate a second at least one metric in relation to the communication of the message.

The listening module may be further arranged to communicate the message to the second message processor module in response to the content delivery mechanism being identified as the second predetermined content delivery mechanism.

The system may further comprise a third message processor module for processing messages communicated in accordance with a third predetermined content delivery mechanism, the third message processor module being arranged to generate a third at least one metric in relation to the communication of the message.

The listening module may be further arranged to communicate the message to the third message processor module in response to the content delivery mechanism being identified as the third predetermined content delivery mechanism.

The system may further comprise a plurality of message processor modules for processing messages respectively communicated in accordance with a corresponding plurality of content delivery mechanisms, the plurality of message processor modules being respectively arranged to generate a respective at least one metric in relation to the communication of the message in accordance with a respective one of the corresponding plurality of content delivery mechanisms.

The listening module may be further arranged to communicate the message to one of the plurality of message processor modules in response to the content delivery mechanism being identified as the respective one of the corresponding plurality of content delivery mechanisms associated with the one of the plurality of message processor modules.

The first predetermined content delivery mechanism may include one of: a Short Messaging Service, a Multimedia Messaging Service, or a Wireless Application Protocol.

The second predetermined content delivery mechanism may include one of: a Short Messaging Service, a Multimedia Messaging Service, or a Wireless Application Protocol.

The third predetermined content delivery mechanism may include one of: a Short Messaging Service, a Multimedia Messaging Service, or a Wireless Application Protocol.

The content delivery mechanism may include one of: a Short Messaging Service, a Multimedia Messaging Service, or a Wireless Application Protocol.

The first message processor module may be arranged to access the content in accordance with the content delivery mechanism. The first, second, and/or third message processor modules may be arranged to access respective content in accordance with the content delivery mechanism. The first, second, and/or third message processor modules may be further arranged to generate a first, second and/or third at least one further metric, respectively in relation to the respective content.

The server is arranged to communicate the messages periodically.

The service monitoring apparatus may further comprise a second listening module arranged to identify another content delivery mechanism associated with another received message and communicate the another message to another message processor module in response to the another content delivery mechanism being identified as a further predetermined content delivery mechanism associated with the another message processor module, the further predetermined content delivery mechanism using a different communications protocol to a communications protocol used to communicate the message.

According to a second aspect of the present invention, there is provided a service monitoring apparatus comprising: a listening module arranged to await receipt of a message communicated in accordance with a communications service, and identify a content delivery mechanism associated with the received message, the message being associated with delivery of content and containing data identifying a first predetermined content delivery mechanism being used to communicate content for receipt by a plurality of network subscribers; a message processor module for processing the message communicated in accordance with the first predetermined content delivery mechanism, the message processor module being arranged to generate a first at least one metric in relation to communication of the message; wherein the listening module is further arranged to communicate the message to the message processor module in response to the content delivery mechanism being identified as the first predetermined delivery mechanism.

According to a third aspect of the present invention, there is provided a method of monitoring a communications service, the method comprising: awaiting receipt of a message associated with delivery of content and communicated in accordance with a communications service; identifying a content delivery mechanism associated with the received message, the message containing data identifying a first predetermined content delivery mechanism being used to communicate the content for receipt by a plurality of network subscribers; communicating the message to a message processor module for processing messages communicated in accordance with the first predetermined content delivery mechanism in response to the content delivery mechanism being identified as the first predetermined content delivery mechanism; and the message processor module generating a first at least one metric in relation to the communication of the message.

According to a fourth aspect of the present invention, there is provided a computer program code element comprising computer program code means to make a computer execute the method as set forth above in relation to the third aspect of the present invention.

The computer program code element may be embodied on a computer readable medium.

It is thus possible to provide an apparatus, system and/or method that serves as a generic framework enabling testing of asynchronous services. Indeed, in general, the apparatus, system and/or method facilitate monitoring of the asynchronous services by Service Providers. In this respect, different measurements can be generated in relation to different content delivery mechanisms, thereby enabling quality of the asynchronous services to be ascertained. The ability to make the different measurements provides a capability to determine exact causes of failure. Further, services originated by the communications network for example push services can be tested. Since the service monitoring apparatus is always monitoring services, messages sent are not missed and do not require monitoring to take place at specific times. Additionally, processing of received messages is substantially immediate. Hence, an automated, repeatable testing environment is provided that is capable of monitoring performance of a given asynchronous service from one or more specific locations using one or more specific subscriber identity.

At least one embodiment of the invention will now be described, by way of example only, with reference to the accompanying drawings, in which:
Figure 1 is a schematic diagram of a communications service monitoring system in a communications network and constituting an embodiment of the invention;
Figure 2 is a schematic diagram of a service monitoring apparatus used in the system of Figure 1;
Figure 3 is a schematic diagram of a subscriber identity allocator used by the system of Figure 1; and
Figure 4 is a flow diagram of a method of monitoring a communications service used in the system of Figure 1.

Throughout the following description identical reference numerals will be used to identify like parts.

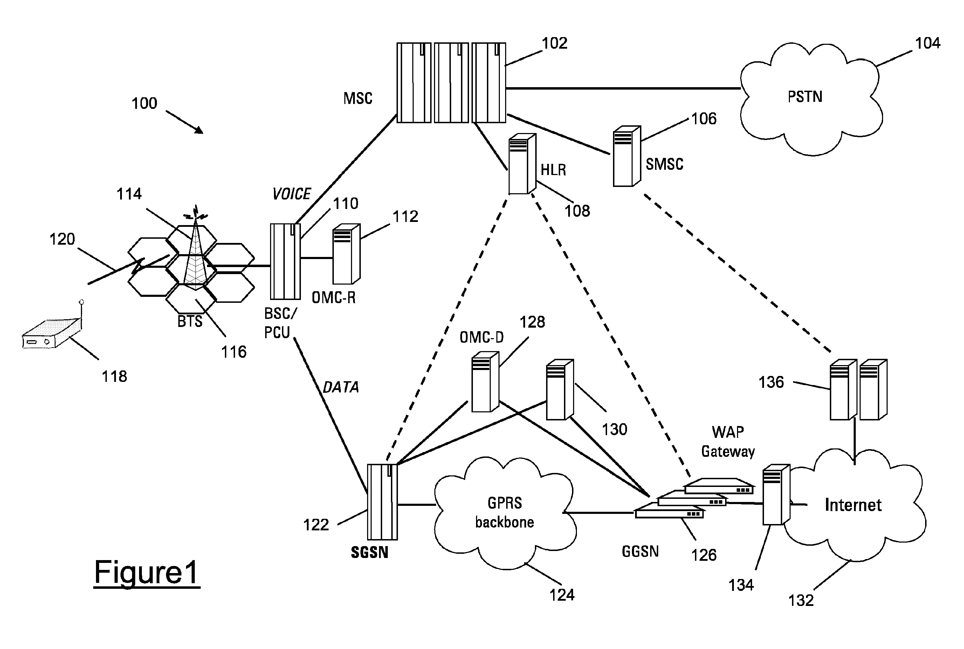

Referring to Figure 1, a communications service monitoring system is implemented in a wireless communications network 100, the communications network 100 being, in this example, a Global Systems for Mobile Communications (GSM) network supporting a General Packet Radio Service (GPRS). The skilled person will, of course, appreciate that other communications networks can be used in place of or overlay the GSM communications network described herein, for example a Universal Mobile Telecommunications System (UMTS) network.

For the sake of conciseness of description and hence ease of understanding, the GSM communications network is not described in detail and the skilled person will recognise that the GSM communications network comprises other functional and structural aspects not described herein.

Referring again to Figure 1, the communications network 100 comprises a Mobile Switching Centre (MSC) 102 coupled to a Public Switched Telephone Network (PSTN) 104, a Short Messaging Service Centre (SMSC) node 106, a Home Location Register (HLR) 108 and a Base Station Controller (BSC) 110 that also has functionality so as to serve as a Packet Control Unit (PCU) to support the GPRS. The BSC 110 is coupled to an Operations and Maintenance Centre-Radio (OMC-R) 112 and a base station 114, the base station 114 supporting a number of cells 116 in one of which a service monitoring apparatus 118 is located. The service monitoring apparatus 118 communicates with the base station 114 via a Radio-Frequency (RF) interface 120.

The BSC 110 is also coupled to a Serving GPRS Support Node (SGSN) 122, the HLR 108 being capable of communicating with the SGSN 122. The SGSN 122 is coupled to a GPRS backbone network 124, the GPRS backbone network 124 being coupled to a Gateway GPRS Support Node (GGSN) 126. Both the SGSN 122 and the GGSN 126 are also coupled to an Operations and Maintenance Centre-Data (OMC-D) 128 and a charging gateway 130. The HLR 108 is also capable of communicating with the GGSN 126.

The GGSN 126 is coupled to, in this example, a data communications network, for example an Internet 132, via a Wireless Applications Protocol (WAP) gateway 134, a content server 136 being coupled to the Internet 132 and capable of communicating with the SMSC 106. A persistent store (not shown), for example a database, is remotely located from the service monitoring apparatus 118. The service monitoring apparatus 118 is, in this example, able to send processed data to the persistent store for storing metrics therein.

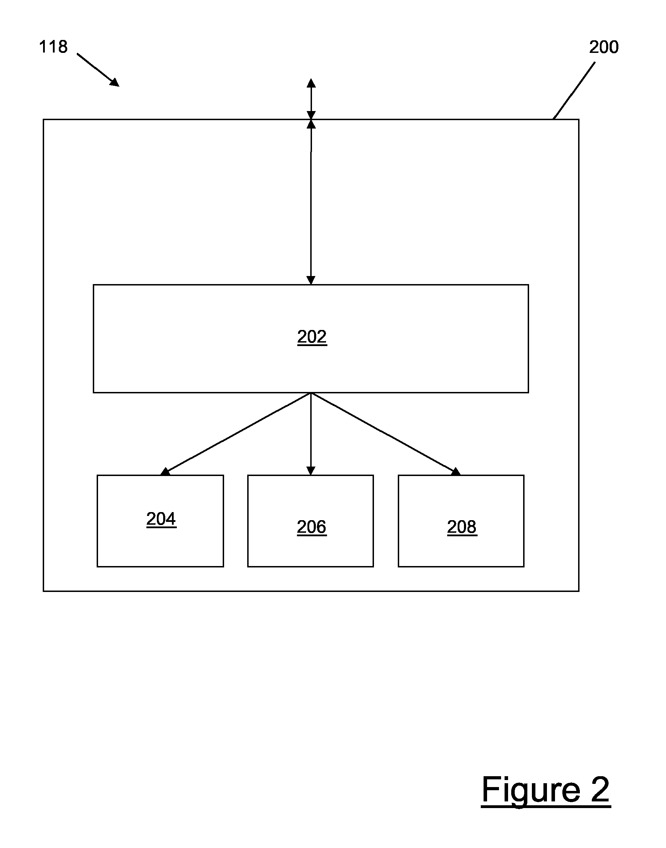

Turning to Figure 2, the service monitoring apparatus 118 comprises an automatic test probe 200, for example a J7756-C , a J7756-D, or a J7756-E automatic test probe available from Agilent Technologies, Inc., capable of communicating with the base station 114. In this example, the automatic test probe 200 is adapted to support the following functional modules.

A service indication listener-multiplexer module 202 resides in the automatic test probe 200 and is able to communicate with a first service-specific message handler 204, a second service-specific message handler 206 and a third service-specific message handler 208. The first, second and third service-specific message handlers 204, 206, 208 constitute message processor modules. The first message handler 204 is dedicated to processing messages associated with a Short Messaging Service (SMS) as a first content delivery mechanism. The second message handler 206 is dedicated to processing messages associated with a Multimedia Messaging Service (MMS) as a second content delivery mechanism, and the third message handler 208 is dedicated to processing messages associated with a WAP as a third content delivery mechanism. In relation to the first, second and third message handlers 204, 206, 208, each is provided with functionality to generate metrics in relation to communication of content using the SMS, MMS and the WAP, respectively.

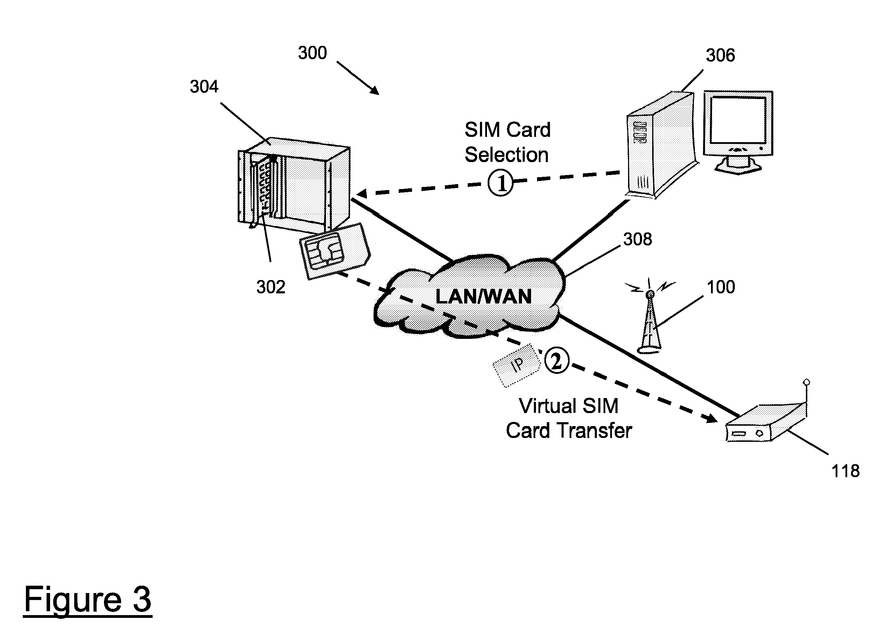

Referring to Figure 3, a subscriber identity allocator 300 is provided in order to enable the service monitoring apparatus 118 to acquire a subscriber identity. In this respect, a plurality of Subscriber Identity Module (SIM) cards 302 are provided by a Network Operator of the communications network 100 for testing purposes. The SIM cards 302 are loaded in, in this example, so-called a "multiplexer" 304, the SIM cards 203 being accessible by a SIM card management unit 306. The SIM card management unit 306 is capable of communicating with the multiplexer 304 via a communications network 308 that can be a combination of a Local Area Network (LAN) and a Wide Area Network (WAN), such as the LAN coupled to the Internet 132 in combination with the wireless communications network 100.

In operation, the Network Operator assigns a number of the plurality of SIM cards 302 for testing a specific content delivery service. Consequently, using the SIM card management unit 306, the service monitoring apparatus 118 is assigned the subscriber identity corresponding to one of the number of the plurality of SIM cards 302. After communicating an assignment instruction from the SIM card management unit 306 to the multiplexer 304 via the communications network 308, the multiplexer 304 communicates an image of the one of the number of the plurality of SIM cards 302 or a so-called "virtual SIM card" to the service monitoring apparatus 118 via the communications network 308.

In order to monitor the content delivery service, for example a stock update or weather information service, the subscriber identity associated with the selected one of the number of the plurality of SIM cards 302 is subscribed to the content delivery service. In this example, the content delivery service is an asynchronous service, also referred to as a "push service", where content originates from the communications network 100. As is known, a number of mechanisms can be employed to "push" content to subscribers. In this respect, the first content delivery mechanism comprises sending an SMS text message as both an indication of a push service and a bearer of content. In this respect, the SMS message is "pushed", in a known manner, using a number of nodes in the network, including the content server 136 via the SMSC 106, to a plurality of network subscribers (including the service monitoring apparatus 118), the plurality of network subscribers being subscribed to the content delivery service. The second and the third content delivery mechanisms each comprise sending or "pushing" an initial SMS message in a like manner to the SMS message described above in relation to the first content delivery mechanism to the plurality of subscribers, and then using a WAP or MMS to communicate/deliver the content to the plurality of subscribers, a WAP session or an MMS session being initiated by a subscriber that receives the initial SMS in order to download the content, i.e. effect delivery of the content. The content, as described herein, should be construed as embracing actual information that is of interest to the plurality of network subscribers and indeed the commodity required by the plurality of network subscribers. The initial SMS message serves as an advice, for example, in connection with the information sought by the plurality of network subscribers, such as a message advising as to availability of the information, sometimes known as an indication message, and also containing data identifying the content delivery mechanism being employed to deliver the content.

By virtue of configuration of software implementing the content delivery service on the content server 136, content is sent, periodically, to the plurality of network subscribers that includes the service monitoring apparatus 118. In this example, a message is sent every hour to the plurality of network subscribers and the MMS content delivery mechanism is employed.

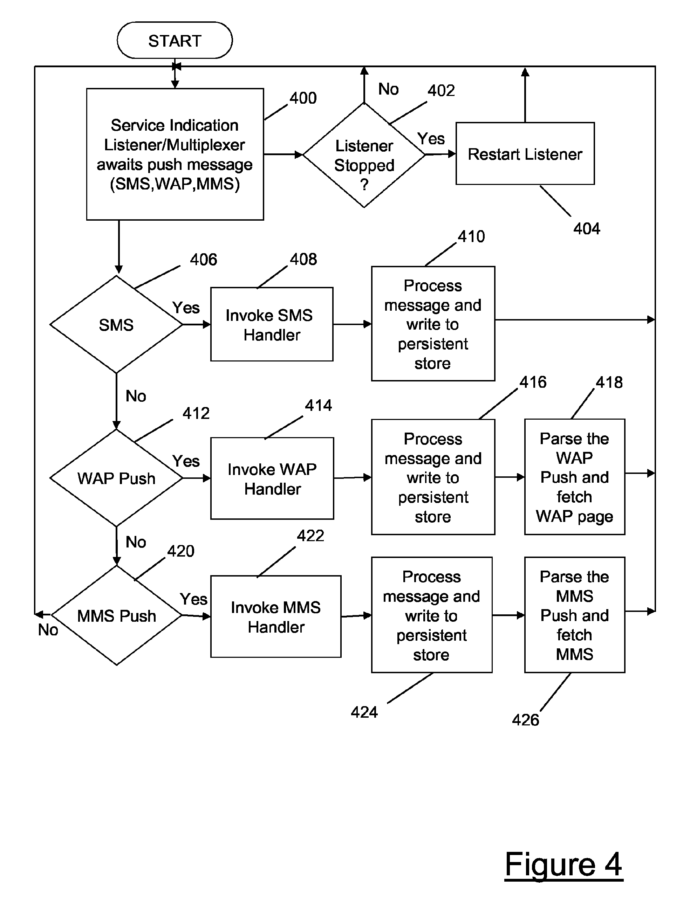

Monitoring of the content delivery service is performed by the service monitoring apparatus 118. In this respect (Figure 4), the service indication listener module 202 awaits (Step 400) receipt of the message addressed by the content server 136 to, inter alios, the subscriber identity of the service monitoring apparatus 118. A separate process monitors whether the service indication listener module 202 has stopped awaiting receipt of messages (Step 402) and restarts (Step 404) the service indication listener module 202 in the event that it stops listening for messages.

Upon receipt of the message, the service indication listener module 202 identifies a content delivery mechanism associated with communication of the message. In this example, the first, second and third message handler modules 204, 206, 208 are provided for making measurements in relation to use of the SMS, MMS and WAP respectively to communicate the content.

Consequently, the service indication listener module 202 firstly determines (Step 406) whether the message was sent in accordance with a text SMS content delivery mechanism. If the SMS is identified as being used to communicate the content, the service indication listener module 202 invokes (Step 408) the first message handler 204 and forwards the message to the first message handler 204 as it is the first message handler 204 that is dedicated, in this example, to processing messages where the SMS is used to communicate the content.

Upon receipt of the message by the first message handler 204, the first message handler 204 performs measurement functions (Step 410) in relation to the SMS to record metrics concerning the communication of the message using the SMS, for example a total number of messages received, a number of valid messages received (a number of messages that have passed all validity checks, such as arrival within an expected time window), and/or a number of messages: sequence failed (a number of large messages having components that have not arrived in sequence), in the persistent store.

In the event that the SMS is not being used to communicate the content to the service monitoring apparatus 118, which is indeed the case in the present example, the service indication listener module 202 next determines (Step 412) whether a WAP content delivery mechanism was associated with communication of the message. In this example, the WAP is therefore identified as being used to communicate the content, and so the service indication listener module 202 invokes (Step 414) the second message handler 206 and forwards the message to the second message handler 206 as it is the second message handler 206 that is dedicated, in this example, to processing messages where the WAP is used to communicate the content. Upon receipt of the message by the second message handler 206, the second message handler 206 performs measurement functions (Step 416) in relation to the WAP, and records metrics concerning the communication of the message using the WAP, for example a total number of messages received, a number of valid messages received (a number of messages that have passed all validity checks, such as arrival within an expected time window), in the persistent store.

Thereafter, the second message handler 206 parses (Step 418) the message to identify a Uniform Resource Locator (URL) contained in the content of the message. The second message handler 206 then downloads a WAP page to which the URL retrieved refers. Hence, the WAP is deemed the mechanism used to deliver the content. The second message handler 206 then generates further metrics in relation to the retrieval of the WAP page, for example an average Total Response Time, an average Data Transfer Time, and/or an average WAP Gateway Connect Time and stores the further metrics in the persistent store. The service indication listener module 202 then returns to awaiting receipt of subsequent messages (Step 400).

If, however, neither the SMS nor the WAP are being used to communicate the content to the service monitoring apparatus 118, the service indication listener module 202 subsequently determines (Step 420) whether an MMS content delivery mechanism was associated with communication of the message. If the MMS is identified as being used to communicate the content, the service indication listener module 202 invokes (Step 422) the third message handler 208 and forwards the message to the third message handler 208 as it is the third message handler 208 that is dedicated, in this example, to processing messages where the MMS is used to communicate the content.

Upon receipt of the message by the third message handler 208, the third message handler 208 performs measurement functions (Step 424) in relation to the MMS, and record metrics concerning the communication of the message using the MMS, for example a total number of messages received, a number of valid messages received (a number of messages that have passed all validity checks, such as arrival within an expected time window), in the persistent store.

Thereafter, the third message handler 208 parses (Step 426) the message sent using the MMS to identify another URL contained in the message and then fetches multimedia content associated with receipt of the message in order to generate further metrics, for example, an average MMS Receive Time, an average MMS Transfer Time, an average WAP Gateway Connect Time, an MMS Receive Failure Ratio, and/or an MMS Transfer Failure Ratio. Subsequently the service indication listener module 202 returns to awaiting receipt of subsequent messages.

The above process is maintained until the service monitoring apparatus 118 is powered-down or monitoring of messages is no longer required.

Using the metrics stored in the persistent store, a Service Provider is able to analyse the metrics and determine levels of performance of the content delivery service as well as identify instances of service failure that need rectifying.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

## Claims

1. A communications service monitoring system comprising:
a server for interfacing with a communications network, the server being arranged to support a communications service that communicates, when in use, a message associated with delivery of content for receipt by a plurality of network subscribers;
a service monitoring apparatus arranged to receive, when in use, the message, the message containing data identifying a first predetermined content delivery mechanism being used to communicate the content, the service monitoring apparatus comprising:
a first message processor module for processing messages communicated in accordance with the first predetermined content delivery mechanism, the first message processor module being arranged to generate a first at least one metric in relation to the communication of the message; and
a listening module arranged to identify a content delivery mechanism associated with the received message and communicate the first message to the message processor module in response to the content delivery mechanism being identified as the first predetermined content delivery mechanism.

2. A system as claimed in Claim 1, wherein the communications service is an asynchronous communications service.

3. A system as claimed in Claim 1 or Claim 2, wherein the communications service is initiated by the server.

4. A system as claimed in any one of the preceding claims, wherein the communications service is a push service.

5. A system as claimed in any one of the preceding claims, wherein the server is arranged to communicate the message for receipt by the plurality of network subscribers that includes the service monitoring apparatus.

6. A system as claimed in any one of the preceding claims, wherein the service monitoring apparatus is arranged to acquire a network subscription identity for receiving the message as one of the plurality of network subscribers.

7. A system as claimed in Claim 6, wherein the network subscription identity is acquired from a subscriber identity allocator.

8. A system as claimed in any one of the preceding claims, further comprising a second message processor module for processing messages communicated in accordance with a second predetermined content delivery mechanism, the second message processor module being arranged to generate a second at least one metric in relation to the communication of the message.

9. A system as claimed in Claim 8, wherein the listening module is further arranged to communicate the message to the second message processor module in response to the content delivery mechanism being identified as the second predetermined content delivery mechanism.

10. A system as claimed in any one of the preceding claims, further comprising a third message processor module for processing messages communicated in accordance with a third predetermined content delivery mechanism, the third message processor module being arranged to generate a third at least one metric in relation to the communication of the message.

11. A system as claimed in Claim 10, wherein the listening module is further arranged to communicate the message to the third message processor module in response to the content delivery mechanism being identified as the third predetermined content delivery mechanism.

12. A system as claimed in any one of the preceding claims, further comprising a plurality of message processor modules for processing messages respectively communicated in accordance with a corresponding plurality of content delivery mechanisms, the plurality of message processor modules being respectively arranged to generate a respective at least one metric in relation to the communication of the message in accordance with a respective one of the corresponding plurality of content delivery mechanisms.

13. A system as claimed in Claim 12, wherein the listening module is further arranged to communicate the message to one of the plurality of message processor modules in response to the content delivery mechanism being identified as the respective one of the corresponding plurality of content delivery mechanisms associated with the one of the plurality of message processor modules.

14. A system as claimed in any one of the preceding claims, wherein the first message processor module is arranged to access the content in accordance with the content delivery mechanism.

15. A system as claimed in any one of the preceding claims, wherein the server is arranged to communicate the content periodically.

16. A service monitoring apparatus comprising:
a listening module arranged to await receipt of a message communicated in accordance with a communications service, and identify a content delivery mechanism associated with the received message, the message being associated with delivery of content and containing data identifying a first predetermined content delivery mechanism being used to communicate the content for receipt by a plurality of network subscribers;
a first message processor module for processing the message communicated in accordance with the first predetermined content delivery mechanism, the first message processor module being arranged to generate a first at least one metric in relation to communication of the message; wherein
the listening module (202) is further arranged to communicate the message to the message processor module in response to the content delivery mechanism being identified as the first predetermined delivery mechanism.

17. A method of monitoring a communications service, the method comprising:
awaiting receipt of a message associated with delivery of content and communicated in accordance with a communications service;
identifying a content delivery mechanism associated with the received message, the message containing data identifying a first predetermined content delivery mechanism being used to communicate the content for receipt by a plurality of network subscribers;
communicating the message to a message processor module for processing messages communicated in accordance with the first predetermined content delivery mechanism in response to the content delivery mechanism being identified as the first predetermined content delivery mechanism; and
the message processor module generating a first at least one metric in relation to the communication of the message.

18. A computer program code element comprising computer program code means to make a computer execute the method as claimed in Claim 11.

19. A computer program code element as claimed in Claim 18, embodied on a computer readable medium.

## Amended claims

### Amended claims in accordance with Rule 86(2) EPC.

**1.** A service monitoring apparatus (118) **characterised by**:
a listening module (202) arranged to await receipt of a message communicated in accordance with a communications service, and identify a content delivery mechanism associated with the received message, the message being associated with delivery of content and containing data identifying a first predetermined content delivery mechanism being used to communicate the content for receipt by a plurality of network subscribers;
a first message processor module (204) for processing the message communicated in accordance with the first predetermined content delivery mechanism, the first message processor module (204) being arranged to generate a first at least one metric in relation to communication of the message; wherein
the listening module (202) is further arranged to communicate the message to the message processor module (204) in response to the content delivery mechanism being identified as the first predetermined delivery mechanism.

**2.** A communications service monitoring system comprising:
a server (136) for interfacing with a communications network (100), the server (136) being arranged to support a communications service that communicates, when in use, a message associated with delivery of content for receipt by a plurality of network subscribers; and
the service monitoring apparatus (118) as claimed in Claim 1.

**3.** A system as claimed in Claim 2, wherein the communications service is an asynchronous communications service.

**4.** A system as claimed in Claim 2 or Claim 3, wherein the communications service is initiated by the server (136).

**5.** A system as claimed in any one of Claims 2 to 4, wherein the communications service is a push service.

**6.** A system as claimed in any one of Claims 2 to 5, wherein the server (136) is arranged to communicate the message for receipt by the plurality of network subscribers that includes the service monitoring apparatus (118).

**7.** A system as claimed in any one of Claims 2 to 6, wherein the service monitoring apparatus (118) is arranged to acquire a network subscription identity for receiving the message as one of the plurality of network subscribers.

**8.** A system as claimed in Claim 7, wherein the network subscription identity is acquired from a subscriber identity allocator (304, 306).

**9.** A system as claimed in any one of Claims 2 to 8, further comprising a second message processor module (206) for processing messages communicated in accordance with a second predetermined content delivery mechanism, the second message processor module (206) being arranged to generate a second at least one metric in relation to the communication of the message.

**10.** A system as claimed in Claim 9, wherein the listening module (202) is further arranged to communicate the message to the second message processor module (206) in response to the content delivery mechanism being identified as the second predetermined content delivery mechanism.

**11.** A system as claimed in any one of Claims 2 to 10, further comprising a third message processor module (208) for processing messages communicated in accordance with a third predetermined content delivery mechanism, the third message processor module (208) being arranged to generate a third at least one metric in relation to the communication of the message.

**12.** A system as claimed in Claim 11, wherein the listening module (202) is further arranged to communicate the message to the third message processor module (208) in response to the content delivery mechanism being identified as the third predetermined content delivery mechanism.

**13.** A system as claimed in any one of Claims 2 to 12, further comprising a plurality of message processor modules (204, 206, 208) for processing messages respectively communicated in accordance with a corresponding plurality of content delivery mechanisms, the plurality of message processor modules (204, 206, 208) being respectively arranged to generate a respective at least one metric in relation to the communication of the message in accordance with a respective one of the corresponding plurality of content delivery mechanisms.

**14.** A system as claimed in Claim 13, wherein the listening module (202) is further arranged to communicate the message to one of the plurality of message processor modules (204, 206, 208) in response to the content delivery mechanism being identified as the respective one of the corresponding plurality of content delivery mechanisms associated with the one of the plurality of message processor modules (204, 206, 208).

**15.** A system as claimed in any one of Claims 2 to 14, wherein the first message processor module (204) is arranged to access the content in accordance with the content delivery mechanism.

**16.** A system as claimed in any one of Claims 2 to 15, wherein the server (136) is arranged to communicate the content periodically.

**17.** A method of monitoring a communications service, the method comprising:
awaiting (400) receipt of a message associated with delivery of content and communicated in accordance with a communications service; **characterised by**:
identifying (406, 412, 420) a content delivery mechanism associated with the received message, the message containing data identifying a first predetermined content delivery mechanism being used to communicate the content for receipt by a plurality of network subscribers;
communicating (408, 414, 422) the message to a message processor module (204, 206, 208) for processing messages communicated in accordance with the first predetermined content delivery mechanism in response to the content delivery mechanism being identified as the first predetermined content delivery mechanism; and
the message processor module (204, 206, 208) generating a first at least one metric in relation to the communication of the message.

**18.** A computer program code element comprising computer program code means to make a computer execute the method as claimed in Claim 17.

**19.** A computer program code element as claimed in Claim 18, embodied on a computer readable medium.
